# EUROPEAN PATENT APPLICATION

(11) **EP 1 865 043 A1**
(43) Date of publication of application: **12.12.2007**
(21) Application number: 07109481.7
(22) Date of filing: 04.06.2007
(51) Int. Cl.: C09K 11/77, G01T 1/202

(54) **Scintillators for detecting radiation, and related methods and articles**

(30) Priority: 07.06.2006 US 448414
(71) Applicant: General Electric Company, Schenectady, NY 12345 (US)
(72) Inventor: Srivastava, Alok Mani, Niskayuna, NY 12309 (US); Duclos, Steven Jude, Clifton Park, NY 12065 (US); Comanzo, Holly Ann, Niskayuna, NY 12309 (US)
(74) Representative: Bedford, Grant Richard

(57) **Abstract**

Scintillator compositions are set forth in this disclosure. The scintillators include a matrix material which includes at least one lanthanide halide, along with at least one alkaline earth metal or lead. An activator for the matrix such as cerium or praseodymium is also described. Radiation detectors which employ the scintillators are discussed, along with related methods for detecting high-energy radiation with a scintillation detector.

## Description

As a general introduction to this disclosure, this invention relates to luminescent materials, e.g., those used to detect ionizing radiation In some specific embodiments, the invention relates to scintillator compositions (and related devices) which are especially useful for detecting gamma-rays and X-rays.

A variety of techniques are known for detecting high-energy radiation. Many of them rely on the use of scintillator materials. Solid-state scintillators are in common use as a component of radiation detectors for gamma-rays, X-rays, cosmic rays, and particles characterized by an energy level of greater than about 1 keV. The scintillator crystal is coupled with a light-detection means, i.e., a photodetector. When photons from a radionuclide source impact the crystal, the crystal emits light. The photodetector produces an electrical signal proportional to the number of light pulses received, and to their intensity.

The scintillators have been found to be useful for applications in chemistry, physics, geology, and medicine. Specific examples of the applications include positron emission tomography (PET) devices; well-logging for the oil and gas industry, and various digital imaging applications. Scintillators are also being investigated for use in detectors for security devices, e.g., detectors for radiation sources which may indicate the presence of radioactive materials in cargo containers.

The specific composition of the scintillator is critical to device performance. The scintillator must be responsive to X-ray and gamma ray excitation. Moreover, the scintillator should possess a number of characteristics which enhance radiation detection. For example, most scintillator materials must possess one or more of the following characteristics: high light output, short decay time, high "stopping power", and acceptable energy resolution. (Other properties can also be very significant, depending on how the scintillator is used, as mentioned below).

Various scintillator materials which possess most or all of these properties have been in use over the years. Examples include thallium-activated sodium iodide (NaI(T1)); bismuth germanate (BGO); cerium-doped gadolinium orthosilicate (GSO); cerium-doped lutetium orthosilicate (LSO); and cerium-activated lanthanide-halide compounds. Each of these materials have properties which are very suitable for certain applications. However, many of them also have some drawbacks. The common problems are low light yield, physical weakness, and the inability to produce large-size, high quality single crystals. Other drawbacks are also present. For example, the thallium-activated materials are very hygroscopic, and can also produce a large and persistent after-glow, which can interfere with scintillator function. Moreover, the BGO materials frequently have a slow decay time. On the other hand, the LSO materials are expensive, and may also contain radioactive lutetium isotopes which can also interfere with scintillator function.

In general, those interested in obtaining the optimum scintillator composition for a radiation detector have been able to review the various attributes set forth above, and thereby select the best composition for a particular device. (As but one example, scintillator compositions for well-logging applications must be able to function at high temperatures, while scintillators for PET devices must often exhibit high stopping power). However, the required overall performance level for most scintillators continues to rise with the increasing sophistication and diversity of all radiation detectors.

With these considerations in mind, the advantages of discovering new scintillator materials are readily apparent. The materials should exhibit excellent light output. They should also possess one or more other desirable characteristics, such as relatively fast decay times and good energy resolution characteristics, especially in the case of gamma rays. Furthermore, they should be capable of being produced efficiently, at reasonable cost and acceptable crystal size.

A first embodiment of this invention is directed to a scintillator composition, comprising the following, and any reaction products thereof:
(a) a matrix material, comprising:
   (i) at least one element selected from the group consisting of alkaline earth metals and lead;
   (ii) at least one lanthanide halide; and
(b) an activator for the matrix material, comprising cerium, praseodymium, or a mixture of cerium and praseodymium.

Another embodiment relates to a radiation detector for detecting high-energy radiation. The detector comprises a light detection means (e.g., a photodetector) operably connected to a scintillator crystal, as described herein.

A method for detecting high-energy radiation with a scintillation detector represents another embodiment. The method comprises the steps of:
(A) receiving radiation by the scintillator crystal set forth in this disclosure, so as to produce photons which are characteristic of the radiation; and
(B) detecting the photons with a photon detector coupled to the scintillator crystal.

Other features and advantages of this invention will become apparent from a review of the remainder of this specification.

Various aspects and embodiments of the present invention will now be described in connection with the accompanying drawings, in which:
FIG. 1 is a graph of the emission spectrum (under X-ray excitation), for a scintillator composition according to an embodiment of the present invention.
FIG. 2 is a graph of the emission spectrum for a composition similar to that of FIG. 1, with different constituent ratios.
FIG. 3 is a graph of the emission spectrum (under X-ray excitation) for another scintillator composition according to an embodiment of the present invention.
FIG. 4 is a graph of the emission spectrum of a composition similar to that of FIG. 3, with different constituent ratios.
FIG. 5 is a graph of the emission spectrum of another composition similar to that of FIG. 3, with different constituent ratios.

One constituent of the matrix material, component a(i), comprises at least one element selected from the group consisting of alkaline earth metals and lead. The alkaline earth metal can be magnesium, calcium, strontium, or barium. (Barium itself is the most preferred alkaline earth metal in some embodiments). Moreover, many different combinations of two or more alkaline earth metals - with or without lead - could also be used. In some embodiments, barium, calcium, or combinations of barium and calcium are preferred. In other embodiments, three alkaline earth metals may be used, or a combination of two alkaline earth metals and lead, e.g., barium, strontium, and lead.

Component a(ii) of the matrix material comprises at least one lanthanide halide compound. The halide is either bromine, chlorine, or iodine. Each of the individual halides may be useful for certain applications. Bromine or chlorine are often preferred for some embodiments. However, in other embodiments, iodine may be preferred. (For example, iodine in some cases exhibits very high light output characteristics.)

The lanthanide of component a(ii) can be any of the rare earth elements, i.e., lanthanum, cerium, praseodymium, neodymium, samarium, europium, gadolinium, terbium, dysprosium, holmium, erbium, thulium, ytterbium, and lutetium. Mixtures of two or more of the lanthanides are also possible. (Those skilled in the art understand that yttrium and scandium are closely associated with the rare earth group. Thus, for the purpose of this disclosure, those two elements are also considered to be a part of the lanthanide family). Preferred lanthanides are selected from the group consisting of lanthanum, yttrium, gadolinium, lutetium, scandium, praseodymium, and mixtures thereof. In especially preferred embodiments, the lanthanide is lanthanum itself.

Some specific, non-limiting examples of the lanthanide halides are as follows: lutetium chloride, lutetium bromide, lutetium iodide, yttrium chloride, yttrium bromide, yttrium iodide, gadolinium chloride, gadolinium bromide, praseodymium chloride, praseodymium bromide, and mixtures thereof. In some embodiments, the lanthanum halides are employed, i.e., lanthanum iodide (LaI₃), lanthanum bromide (LaBr₃), lanthanum chloride (LaCl₃), and mixtures thereof, e.g., a solid solution of at least two lanthanide halides.

Some specific families of scintillators for particular embodiments can also be described. For example, the scintillator matrix could comprise a compound of the formula

β LnX₅, (I)

or

β ₂LnX₇, (II)

wherein β is at least one element selected from the group consisting of alkaline earth metals and lead; Ln is at least one lanthanide element; and X is selected from the group consisting of bromine, chlorine, iodine, and combinations thereof.

Non-limiting examples of compounds according to formula (I) are:
BaGdCl₅, BaLaCl₅, BaGdBr₅, BaLuCl₅, PbGdCl₅, and CaGdCl₅.

Non-limiting examples of compounds according to formula (II) are:
Ba₂YCl₇, Ba₂GdCl₇, Ba₂LaCl₇, Ba₂LuCl₇, Ba₂YBr₇, Ba₂YI₇, Ba₂LaBr₇, Ba₂LaI₇,
Sr₂YCl₇, BaSrYCl₇, BaSrLaCl₇, BaSrLuCl₇, BaSrYBr₇, BaSrLaBr₇, BaSrLuBr₇,
Ca₂YCl₇, Ca₂YBr₇, Ca₂LaCl₇, Ca₂LuCl₇,
Pb₂YCl₇, Pb₂YBr₇, Pb₂LaCl₇, and Pb₂LuCl₇.

Several of the matrix materials which are preferred for certain applications are Ba₂YCl₇, Ba₂GdCl₇, and Ba₂LuCl₇.

In some embodiments, the matrix material may further comprise bismuth. The presence of bismuth can enhance various properties, like stopping power. The amount of bismuth (when present) can vary to some extent. Usually, bismuth would be present at a level of about 1 mole % to about 40 mole % of the total molar weight of the matrix material (i.e., component (a)), including the bismuth itself. In preferred embodiments, the level of bismuth is about 5 mole % to about 20 mole %. (As mentioned below in the case of other constituents, bismuth can be described as being a part of the entire scintillator composition, rather than specifically as a component of the matrix itself).

In other embodiments of the invention, the matrix material further comprises at least one element selected from the group of alkali metals and thallium. The alkali metal can be sodium, potassium, rubidium, or cesium. Cesium is sometimes the most preferred alkali metal. Moreover, many different combinations of alkali metals - with or without thallium - could also be used. A non-limiting example is a combination of cesium and potassium.

Some specific families of scintillators for these embodiments can also be exemplified. Thus, in some cases, the scintillator matrix could comprise a compound of the formula

AβLnX₆, (III)

wherein A is at least one element selected from the group consisting of alkali metals and thallium; and β is at least one alkaline earth metal. As also described previously, Ln is at least one lanthanide element; and X is at least one halogen element. In some preferred embodiments, "A" is sodium, cesium, or a combination of sodium and cesium. Cesium is especially useful in some of the scintillator compositions.

Non-limiting examples of this type of matrix material are as follows:
NaBaLaBr₆, NaBaGdCl₆, CsBaLaBr₆, CsBaGdCl₆,
NaCaLaBr₆, NaCaGdCl₆, CsCaLaBr₆, CsCaGdCl₆,
NaBaLuBr₆, NaBaLuCl₆, CsBaLuBr₆, and CsBaLuCl₆.

(As in the case of previous embodiments, the matrix material for these embodiments may further comprise bismuth, e.g., at the levels described above).

In some specific embodiments for a scintillator material like that of formula (III), the matrix could comprise a compound having the formula

(CsₓNa₁₋ₓ)(BaₓCa₁₋ₓ)Ln(BrₓCl₁₋ₓ)₆, (IV)

or

(CsₓRb₁₋ₓ)(BaₓCa₁₋ₓ)Ln(BrₓCl₁₋ₓ)₆, (V)

wherein Ln is at least one lanthanide compound, and each x is independently 0 ≤ x≤ 1.

As mentioned above, the scintillator composition also includes an activator. (The activator is sometimes referred to as a "dopant"). The preferred activator is selected from the group consisting of cerium, praseodymium, and mixtures of cerium and praseodymium. In terms of luminescence efficiency and decay time, cerium is often the most preferred activator. It is usually employed in its trivalent form, Ce⁺³. The activator can be supplied in various forms, e.g., halides like cerium chloride or cerium bromide.

The appropriate level of activator will depend on various factors, such as the particular halide and other elements present in the matrix. Other factors include the desired emission properties and decay time; and the type of detection device into which the scintillator is being incorporated. Usually, the activator is employed at a level in the range of about 0.1 mole % to about 20 mole %, based on total moles of activator and matrix material. In many preferred embodiments, the amount of activator is in the range of about 1 mole % to about 10 mole %.

The scintillator compositions of this invention are usually described in terms of a matrix material component and an activator component. However, it should be understood that when the components are combined, they can be considered as a single, intimately-mixed composition, which still retains the attributes of activator and component. Thus, for example, an illustrative composition in which the alkaline earth metal is barium; the lanthanide compound is yttrium; the halide is chlorine; and the activator is cerium, could be expressed by a single chemical formula, such as

Ba₂(Y_{0.98}Ce_{0.02})Cl₇.

The scintillator composition described herein may be prepared and used in various forms. Very often, the composition is in monocrystalline (i.e., "single crystal") form. Monocrystalline scintillator crystals have a greater tendency for transparency. They are especially useful for high-energy radiation detectors, e.g., those used for gamma rays. The scintillator composition can be used in other forms as well, depending on its intended end use. For example, it can be in powder form. It should also be understood that the scintillator composition may contain small amounts of impurities, as described in the previously-referenced publications, WO 01/60944 A2 and WO 01/60945 A2 (incorporated herein by reference). These impurities usually originate with the starting materials, and typically constitute less than about 0.1% by weight of the scintillator composition. Very often, they constitute less than about 0.01% by weight of the composition. The composition may also include parasitic additives, whose volume percentage is usually less than about 1%. Moreover, minor amounts of other materials may be purposefully included in the scintillator compositions.

Various techniques can be used for the preparation of the scintillator compositions. (It should be understood that the compositions may also contain a variety of reaction products of these techniques). Usually, a suitable powder containing the desired materials in the correct proportions is first prepared, followed by such operations as calcination, die forming, sintering, and/or hot isostatic pressing. The powder can be prepared by mixing various forms of the reactants (e.g., salts, halides, or various mixtures of these forms). In some cases, individual constituents are used in combined form. (They may be commercially available in that form, for example). As an illustration, various halides of the alkali metals and alkaline earth metals could be used. Non-limiting examples include compounds such as barium iodide, cesium chloride, potassium bromide, cesium bromide, cesium iodide, thallium iodide, lead bromide, strontium chloride, and the like.

The reactants can be mixed by any suitable technique which ensures thorough, uniform blending. For example, mixing can be carried out in an agate mortar and pestle. Alternatively, a blender or pulverization apparatus can be used, such as a ball mill, a bowl mill, a hammer mill, or a jet mill. Conventional precautions usually must be taken to prevent the introduction of any air or moisture during mixing. The mixture can also contain various additives, such as fluxing compounds and binders. Depending on compatibility and/or solubility, various liquids can sometimes be used as a vehicle during milling. Suitable milling media should be used, e.g., material that would not be contaminating to the scintillator, since such contamination could reduce its light-emitting capability.

After being blended, the mixture can then be fired under temperature and time conditions sufficient to convert the mixture into a solid solution. These conditions will depend in part on the specific type of matrix material and activator being used. The mixture is usually contained in a sealed vessel (e.g., a tube or crucible made of quartz or silver) during firing, so that none of the constituents are lost to the atmosphere). Usually, firing will be carried out in a furnace, at a temperature in the range of about 500°C to about 1500°C. The firing time will typically range from about 15 minutes to about 10 hours. Firing is usually carried out in an atmosphere free of oxygen and moisture, e.g., in a vacuum, or using an inert gas such as nitrogen, helium, neon, argon, krypton, and xenon. After firing is complete, the resulting material can be pulverized, to put the scintillator into powder form. Conventional techniques can then be used to process the powder into radiation detector elements.

In the case of single crystal materials, preparation techniques are also well-known in the art. A non-limiting, exemplary reference is "Luminescent Materials", by G. Blasse et al, Springer-Verlag (1994). Usually, the appropriate reactants are melted at a temperature sufficient to form a congruent, molten composition. The melting temperature will depend on the identity of the reactants themselves, but is usually in the range of about 650°C to about 1100°C.

A variety of techniques can be employed to prepare a single crystal of the scintillator material from a molten composition. They are described in many references, such as

U.S. Patent 6,437,336 (Pauwels et al); "Crystal Growth Processes", by J.C. Brice, Blackie & Son Ltd (1986); and the "Encyclopedia Americana", Volume 8, Grolier Incorporated (1981), pages 286-293. These descriptions are incorporated herein by reference. Non-limiting examples of the crystal-growing techniques are the Bridgman-Stockbarger method; the Czochralski method, the zone-melting method (or "floating zone" method), and the temperature gradient method. Those skilled in the art are familiar with the necessary details regarding each of these processes.

U.S. Patent 6,585,913 (Lyons et al; incorporated herein by reference) provides some useful information for one method of producing a scintillator in single crystal form. In this method, a seed crystal of the desired composition (described above) is introduced into a saturated solution. The solution is contained in a suitable crucible, and contains appropriate precursors for the scintillator material. The new crystalline material is allowed to grow and add to the single crystal, using one of the growing techniques mentioned above. The size of the crystal will depend in part on its desired end use, e.g., the type of radiation detector in which it will be incorporated.

Additional embodiments of the invention are directed to methods for detecting high-energy radiation with a scintillation detector. The detector includes one or more crystals, formed from the scintillator composition described herein. Scintillation detectors are well-known in the art, and need not be described in detail here. Several references (of many) which discuss such devices are U.S. Patents 6,585,913 and 6,437,336, mentioned above, and U.S. 6,624,420 (Chai et al), which is also incorporated herein by reference. In general, the scintillator crystals in these devices receive radiation from a source being investigated, and produce photons which are characteristic of the radiation. The photons are detected with some type of photodetector ("photon detector"). (The photodetector is connected to the scintillator crystal by conventional electronic and mechanical attachment systems).

The photodetector can be a variety of devices, all well-known in the art. Non-limiting examples include photomultiplier tubes, photodiodes, CCD sensors, and image intensifiers. Choice of a particular photodetector will depend in part on the type of radiation detector being fabricated, and on its intended use.

The radiation detectors themselves, which include the scintillator and the photodetector, can be connected to a variety of tools and devices, as mentioned previously. Non-limiting examples include well-logging tools and nuclear medicine devices (e.g., PET). The radiation detectors may also be connected to digital imaging equipment, e.g., pixilated flat panel devices. Moreover, the scintillator may serve as a component of a screen scintillator. For example, powdered scintillator material could be formed into a relatively flat plate which is attached to a film, e.g., photographic film. High energy radiation, e.g., X-rays, originating from some source, would contact the scintillator and be converted into light photons which are developed on the film. Furthermore, the radiation detectors may also be used for security devices. For example, they could be used to detect the presence of radioactive materials in cargo containers.

Several of the specific end use applications can be described here in more detail, although many of the relevant details are known to those skilled in the art. Well-logging devices were mentioned previously, and represent an important application for these radiation detectors. The technology for operably connecting the radiation detector to a well-logging tube is well-understood. The general concepts are described in U.S. Patent 5,869,836 (Linden et al), which is incorporated herein by reference. The crystal package containing the scintillator usually includes an optical window at one end of the enclosure-casing. The window permits radiation-induced scintillation light to pass out of the crystal package for measurement by the light-sensing device (e.g., the photomultiplier tube), which is coupled to the package. The light-sensing device converts the light photons emitted from the crystal into electrical pulses that are shaped and digitized by the associated electronics. By this general process, gamma rays can be detected, which in turn provides an analysis of the rock strata surrounding the drilling bore holes. It should be emphasized, however, that many variations of well-logging devices are possible.

Medical imaging equipment, such as the PET devices mentioned above, represent another important application for these radiation detectors. The technology for operably connecting the radiation detector (containing the scintillator) to a PET device is also well-known in the art. The general concepts are described in many references, such as U.S. Patent 6,624,422 (Williams et al), incorporated herein by reference. In brief, a radiopharmaceutical is usually injected into a patient, and becomes concentrated within an organ of interest. Radionuclides from the compound decay and emit positrons. When the positrons encounter electrons, they are annihilated and converted into photons, or gamma rays. The PET scanner can locate these "annihilations" in three dimensions, and thereby reconstruct the shape of the organ of interest for observation. The detector modules in the scanner usually include a number of "detector blocks", along with the associated circuitry. Each detector block may contain an array of the scintillator crystals, in a specified arrangement, along with photomultiplier tubes. As in the case of well-logging devices, many variations on PET devices are possible.

The light output of the scintillator is important for both the well-logging and PET technologies. The present invention can provide scintillator materials which possess the desired light output for demanding applications of the technologies. Moreover, it is possible that the crystals can simultaneously exhibit some of the other important properties noted above, e.g., short decay time, high "stopping power", and acceptable energy resolution. Furthermore, the scintillator materials can be manufactured economically. They can also be employed in a variety of other devices which require radiation detection.

### EXAMPLES

The examples which follow are merely illustrative, and should not be construed to be any sort of limitation on the scope of the claimed invention.

### Example 1

Two samples of a cerium-activated scintillator composition were prepared, in which the matrix portion of the composition had the formula Ba₂YCl₇. The nominal composition for sample A was Ba₂Y_{0.98}Ce_{0.02}Cl₇. The nominal composition for sample B was Ba₂Y_{0.95}Ce_{0.05}Cl₇. To prepare sample A, 1.3594 grams of BaCl₂, 0.6246 grams of YCl₃, and 0.0161 grams of CeCl₃, were weighed in a glove box. For sample B, the amounts were as follows: 1.3560 grams of BaCl₂, 0.6039 grams of YCl₃, and 0.0401 grams of CeCl₃. For each sample, the materials were thoroughly blended, and then sealed in a silver tube. Firing was carried out at about 700°C for 5 hours, under an inert atmosphere.

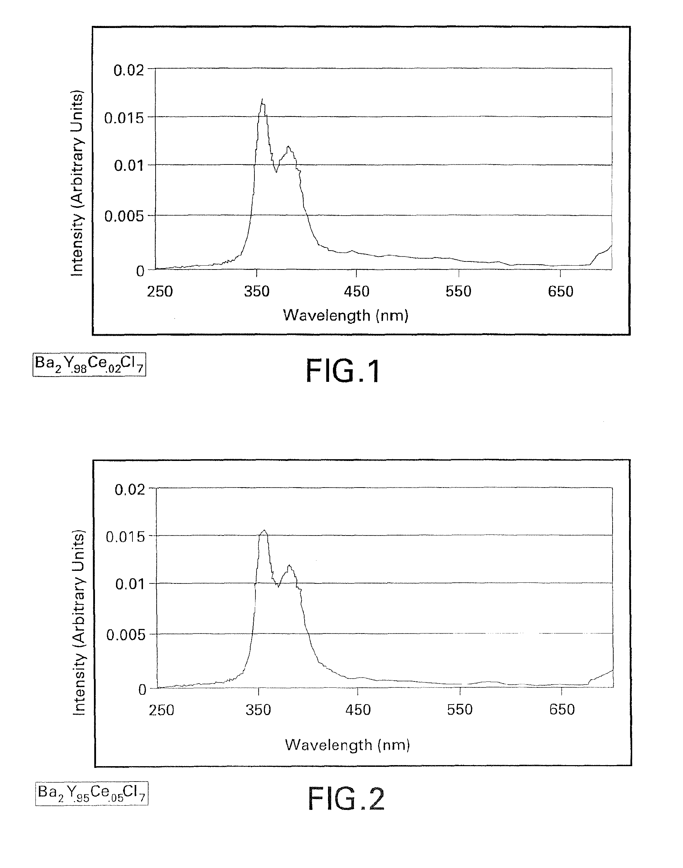

The emission spectra for these samples were determined under X-ray excitation, using an optical spectrometer. FIGS. 1 and 2 each show a plot of wavelength (nm) as a function of intensity (arbitrary units). The peak excitation wavelength for sample A was about 350 nm, while the peak excitation wavelength for sample B was about 355 nm. It was also confirmed that these scintillator compositions can be excited by gamma rays, to an emission level which is characteristic of the cerium ion. These emission characteristics are a clear indication that the compositions described herein would be very useful for a variety of devices employed to detect gamma rays.

### Example 2

Three samples of a cerium-activated scintillator composition were prepared, in which the matrix portion of the composition had the formula NaBaLaBr₆. The nominal composition for sample C was NaBaLa_{0.95}Ce_{0.05}Br₆. The nominal composition for sample D was NaBaLa_{0.80}Ce_{0.20}Br₆. The nominal composition for sample E was NaBaLa_{0.90}Ce_{0.10}Br₆.

To prepare sample C, 0.2643 grams of NaBr, 0.7632 grams of BaBr₂, 0.9239 grams of LaBr₃, and 0.0488 grams of CeBr₃ were weighed in a glove box. For sample D, the amounts were as follows: For sample D, the amounts were as follows: 0.2642 grams of NaBr, 0.7630 grams of BaBr₂, 0.7778 grams of LaBr₃, and 0.1951 grams of CeBr₃. For sample E, the amounts were as follows: 0.2643 grams of NaBr, 0.7632 grams of BaBr₂, 0.8752 grams of LaBr₃, and 0.0976 grams of CeBr₃. In each case, the materials were thoroughly blended, and then sealed in a silver tube. Firing was carried out at about 700°C for 5 hours, under an inert atmosphere.

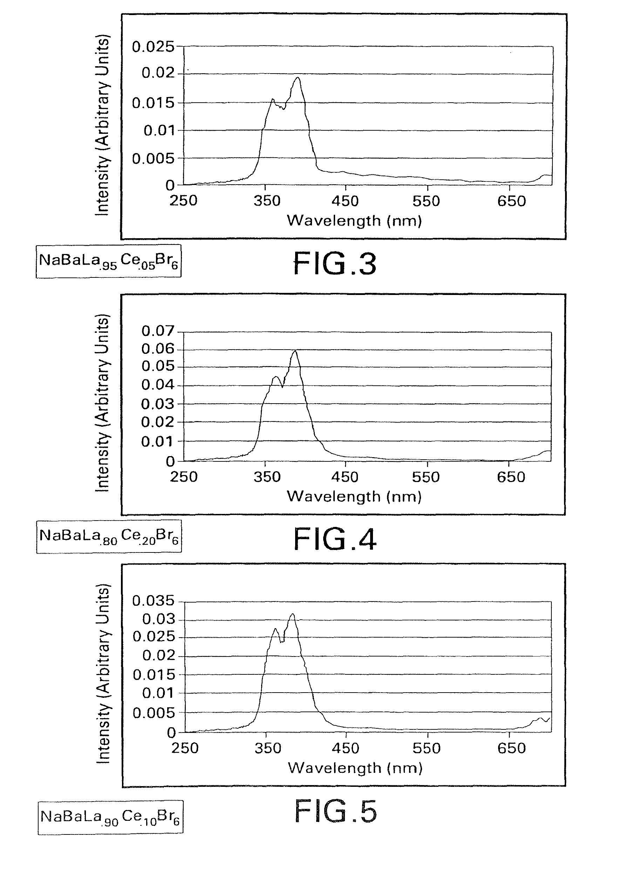

The emission spectra for these samples were determined under X-ray excitation, using an optical spectrometer. FIGS. 3, 4 and 5 each show a plot of wavelength (nm) as a function of intensity (arbitrary units). The peak excitation wavelength for sample C was about 395 nm. The peak excitation wavelength for sample D was about 390 nm, while the peak excitation wavelength for sample E was about 395 nm. As in Example 1, it was shown here the scintillator composition can be excited by gamma rays, to an emission level which is characteristic of the cerium ion. All of the samples were also found to emit efficiently when excited by X-ray or UV radiation.

As in Example 1, it was shown here the scintillator composition can be excited by gamma rays, to an emission level which is characteristic of the cerium ion. All of the samples were also found to emit efficiently when excited by X-ray or UV radiation. These emission characteristics are a clear indication that the compositions described herein would be very useful for a variety of devices employed to detect gamma rays.

Although the present invention has been shown and described with reference to some specific embodiments, it will be apparent to those of ordinary skill in this area of technology that other modifications of this invention may be made, without departing from the spirit of the invention. Accordingly, the modifications contemplated by those skilled in the art should be considered to be within the scope of this invention. Furthermore, all of the patents, patent publications, and other references mentioned above are incorporated herein by reference.

Various aspects and embodiments of the present invention are defined in the following numbered clauses:
1. A scintillator composition, comprising the following, and any reaction products thereof:
   (a) a matrix material, comprising:
      (i) at least one element selected from the group consisting of alkaline earth metals and lead;
      (ii) at least one lanthanide halide; and
   (b) an activator for the matrix material, comprising cerium, praseodymium, or a mixture of cerium and praseodymium.
2. The scintillator composition of clause 1, wherein component a(i) comprises at least two alkaline earth metals.
3. The scintillator composition of clause 1 or clause 2, wherein component a(i) comprises lead and at least one alkaline earth metal.
4. The scintillator composition of any of clauses 1 to 3, wherein the activator is present at a level in the range of about 0.1 mole % to about 20 mole %, based on total moles of activator and matrix material.
5. The scintillator composition of any of clauses 1 to 4, wherein the matrix material comprises a compound of the formula
   β LnX₅, wherein β is at least one element selected from the group consisting of alkaline earth metals and lead; Ln is at least one lanthanide element; and X is selected from the group consisting of bromine, chlorine, iodine, and combinations thereof.
6. The scintillator composition of any of clauses 1 to 5, wherein the matrix material comprises a compound of the formula
   β ₂LnX₇, wherein β is at least one element selected from the group consisting of alkaline earth metals and lead; Ln is at least one lanthanide element; and X is selected from the group consisting of bromine, chlorine, iodine, and combinations thereof.
7. The scintillator composition of any of clauses 1 to 6, further comprising bismuth.
8. The scintillator composition of any of clauses 1 to 7, wherein the matrix material further comprises at least one element selected from the group of alkali metals and thallium.
9. The scintillator composition of clause 8, further comprising bismuth.
10. A radiation detector for detecting high-energy radiation, comprising:
   (A) a crystal scintillator which comprises the following composition, and any reaction products thereof:
      (a) a matrix material, comprising:
         (i) at least one element selected from the group consisting of alkaline earth metals and lead;
         (ii) at least one lanthanide halide;
      (b) an activator for the matrix material, comprising cerium, praseodymium, or a mixture of cerium and praseodymium; and
   (B) a photodetector optically coupled to the scintillator, so as to be capable of producing an electrical signal in response to the emission of a light pulse produced by the scintillator.
11. The radiation detector of clause 10, wherein the photodetector is at least one device selected from the group consisting of a photomultiplier tube, a photodiode, a CCD sensor, and an image intensifier.
12. The radiation detector of clauses 10 or 11, operably connected to a well-logging tool.
13. The radiation detector of any of clauses 10 to 12, operably connected to a nuclear medicine apparatus.
14. The radiation detector of clause 13, wherein the nuclear medicine apparatus comprises a positron emission tomography (PET) device.
15. The radiation detector of any of clauses 10 to 14, operably connected to a device for detecting the presence of radioactive materials in cargo containers.
16. A method for detecting high-energy radiation with a scintillation detector, comprising the steps of:
   (A) receiving radiation by a scintillator crystal, so as to produce photons which are characteristic of the radiation; and
   (B) detecting the photons with a photon detector coupled to the scintillator crystal;
      wherein the scintillator crystal is formed of a composition comprising the following, and any reaction products thereof:
      (a) a matrix material, comprising:
         (i) at least one element selected from the group consisting of alkaline earth metals and lead;
         (ii) at least one lanthanide halide; and
      (b) an activator for the matrix material, comprising cerium, praseodymium, or a mixture of cerium and praseodymium.

## Claims

1. A scintillator composition, comprising the following, and any reaction products thereof:
(a) a matrix material, comprising:
(i) at least one element selected from the group consisting of alkaline earth metals and lead;
(ii) at least one lanthanide halide; and
(b) an activator for the matrix material, comprising cerium, praseodymium, or a mixture of cerium and praseodymium.

2. The scintillator composition of claim 1, wherein component a(i) comprises at least two alkaline earth metals.

3. The scintillator composition of claim 1 or claim 2, wherein component a(i) comprises lead and at least one alkaline earth metal.

4. The scintillator composition of any preceding claim, wherein the activator is present at a level in the range of about 0.1 mole % to about 20 mole %, based on total moles of activator and matrix material.

5. The scintillator composition of any preceding claim, wherein the matrix material comprises a compound of the formula
β LnX₅, wherein β is at least one element selected from the group consisting of alkaline earth metals and lead; Ln is at least one lanthanide element; and X is selected from the group consisting of bromine, chlorine, iodine, and combinations thereof.

6. The scintillator composition of any preceding claim, wherein the matrix material comprises a compound of the formula
β ₂LnX₇, wherein β is at least one element selected from the group consisting of alkaline earth metals and lead; Ln is at least one lanthanide element; and X is selected from the group consisting of bromine, chlorine, iodine, and combinations thereof.

7. The scintillator composition of any preceding claim, further comprising bismuth.

8. The scintillator composition of any preceding claim, wherein the matrix material further comprises at least one element selected from the group of alkali metals and thallium.

9. A radiation detector for detecting high-energy radiation, comprising:
(A) a crystal scintillator which comprises the following composition, and any reaction products thereof:
(a) a matrix material, comprising:
(i) at least one element selected from the group consisting of alkaline earth metals and lead;
(ii) at least one lanthanide halide;
(b) an activator for the matrix material, comprising cerium, praseodymium, or a mixture of cerium and praseodymium; and
(B) a photodetector optically coupled to the scintillator, so as to be capable of producing an electrical signal in response to the emission of a light pulse produced by the scintillator.

10. A method for detecting high-energy radiation with a scintillation detector, comprising the steps of:
(A) receiving radiation by a scintillator crystal, so as to produce photons which are characteristic of the radiation; and
(B) detecting the photons with a photon detector coupled to the scintillator crystal;
wherein the scintillator crystal is formed of a composition comprising the following, and any reaction products thereof:
(a) a matrix material, comprising:
(i) at least one element selected from the group consisting of alkaline earth metals and lead;
(ii) at least one lanthanide halide; and
(b) an activator for the matrix material, comprising cerium, praseodymium, or a mixture of cerium and praseodymium.
